## Europäisches Patentamt
## European Patent Office
## Office européen des brevets

(19)

(11) Numéro de publication: **0 148 654**
**B1**

(12) # FASCICULE DE BREVET EUROPÉEN

(45) Date de publication du fascicule du brevet:
20.07.88

(51) Int. Cl.⁴: **H 04 N 5/335, H 04 N 3/15**

(21) Numéro de dépôt: **84402302.8**

(22) Date de dépôt: **13.11.84**

(54) **Dispositif photosensible pour l'infra-rouge.**

(30) Priorité: **15.11.83 FR 8318125**

(43) Date de publication de la demande:
**17.07.85 Bulletin 85/29**

(45) Mention de la délivrance du brevet:
**20.07.88 Bulletin 88/29**

(84) Etats contractants désignés:
**DE GB NL SE**

(56) Documents cité:
**GB-A-2 079 093**

**ELECTRONICS LETTERS, vol. 18, no. 7, avril 1982, pages 285-287, Londres, GB; R.A. BALLINGALL et al.: "Electronically scanned CMT detector array for the 8-14 mum band"**
**MICROELECTRONICS JOURNAL, vol. 10, no. 1, mai/juin 1979, pages 37-44, Mackintosh Publications Ltd., Luton, US; C. TASSELL et al.: "Photodiode arrays-characteristics and applications"**

(73) Titulaire: **THOMSON- CSF, 173, Boulevard Haussmann, F-75379 Paris Cédex 08 (FR)**

(72) Inventeur: **Arques, Marc, THOMSON- CSF SCPI 173, bld Haussmann, F-75379 Paris Cedex 08 (FR)**
Inventeur: **Munier, Bernard, THOMSON- CSF SCPI 173, bld Haussmann, F-75379 Paris Cedex 08 (FR)**

(74) Mandataire: **Mayeux, Michèle, THOMSON- CSF SCPI 19, avenue de Messine, F-75008 Paris (FR)**

## Description

La présente invention concerne un dispositif photosensible pour l'infra-rouge.

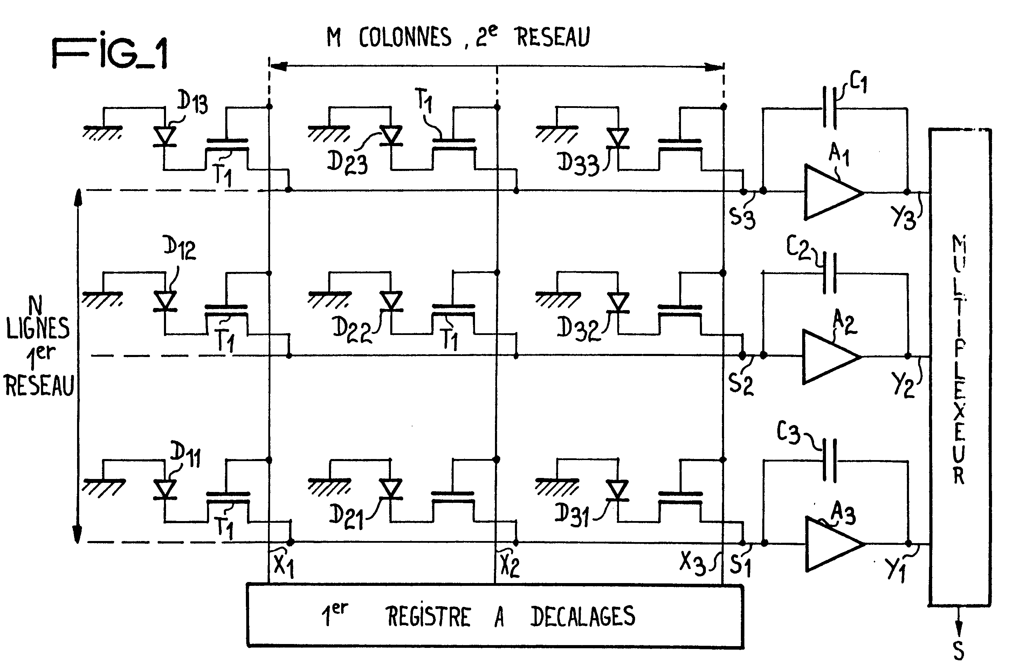

Par l'article intitulé "Electronically scanned C.M.T. detector array for the 8-14 µm band", paru dans la revue "Electronics Letters", du 1er Avril 1982, volume 18, numéro 7, pages 285 à 287, on connait un dispositif photosensible pour l'infra-rouge qui va être décrit en se référant à la figure 1 annexée à la présente description.

Ce dispositif comporte un réseau de N lignes et M colonnes de détecteurs infra-rouge intégrés sur un substrat semi-conducteur. Sur la figure 1, on a choisi M = N 3, à titre d'exemple. Les détecteurs $D_{11}$, $D_{21}$ $D_{31}$..., $D_{12}$, $D_{22}$, $D_{32}$... sont des photodiodes, intégrées sur un substrat semi-conducteur en cadmium, mercure et tellurure (C.M.T), chaque photodiode est associée a un transistor MOS $T_1$. On voit sur la figure 1, que l'anode de chaque photodiode est reliée à la masse et sa cathode est reliée au transistor MOS $T_1$. Un premier réseau d'électrodes horizontales relie les transistors MOS $T_1$ associés aux détecteurs d'une même ligne. Un second réseau d'électrodes verticales relie les grilles des transistors MOS $T_1$ associés aux détecteurs d'une même colonne. Un premier registre à décalages permet d'adresser successivement chaque électrode du second reseau. Lorsqu'une électrode du second réseau est adressée, il y a intégration des charges correspondant au rayonnement infra-rouge, reçu par les détecteurs reliés à cette électrode, par exemple, les détecteurs $D_{11}$, $D_{12}$, $D_{13}$ sur la figure 1. L'intégration et la lecture des charges se fait par des amplificateurs opérationnels montés en intégrateurs, avec une capacité $C_1$, $C_2$, $C_3$ entre leur entrée négative et leur sortie, et qui sont reliés à chaque électrode du premier reseau. Un multiplexeur reçoit les sorties des amplificateurs et fournit un signal S de lecture en série des charges intégrée dans les détecteurs d'une colonne. L'intégration des charges des détecteurs $D_{21}$, $D_{22}$, $D_{23}$ de la colonne suivante commence ensuite.

Les premiers transistors MOS $T_1$ ainsi que le premier registre à décalages sont intégrés sur un substrat semi-conducteur en silicium qui est interconnecté avec le substrat portant les détecteurs infra-rouge. Les premiers transistors MOS $T_1$ et le premier registre à décalages sont placés dans le même cryostat porté à 77 K que les détecteurs infra-rouge.

Le problème qui se pose, et que la présente invention permet de résoudre, est que les amplificateurs opérationnels montés en intégrateurs ne peuvent pas être placés à l'intérieur du cryostat. Comme leur consommation, et donc leur température sont élevées, cela poserait des difficultés de les mettre dans le cryostat. De plus, à cause de cette consommation élevée, ils sont réalisés en composants discrets et sont encombrants. La conséquence est qu'il faut établir de nombreuses connexions entre le cryostat et le reste du dispositif. De plus, les connexions entre le cryostat et les amplificateurs opérationnels transportent des signaux à bas niveau, et sensibles aux parasites.

La présente invention permet de résoudre ce problème. Elle concerne un dispositif photosensible pour l'infra-rouge ayant un fonctionne ment comparable à celui du dispositif décrit dans l'article cité, mais dans lequel le cryostat ne comporte qu'une seule sortie, à fort niveau de tension et basse impédance.

Selon la revendication 1, la présente invention concerne un dispositif photosensible pour l'infra-rouge comportant:

- un réseau de N lignes et de M colonnes de détecteurs infrarouge intégrés sur un premier substrat semi-conducteur et deux réseaux d'électrodes, l'un des réseaux étant affecté aux détecteurs d'une même ligne et l'autre aux détecteurs d'une même colonne;

- un premier transistor MOS connecté entre chaque détecteur et une électrode d'un premier réseau;

- un premier registre à décalages qui adresse l'une après l'autre les électrodes d'un second réseau, les premiers transistors MOS et le premier registre étant intégrés sur un second substrat semi-conducteur et placés dans un cryostat avec les détecteurs, caractérisé en ce que le dispositif comporte, intégrés dans le second substrat semi-conducteur et placés dans le cryostat:

- un deuxième transistor MOS connecté entre la, grille de chaque premier transistor MOS et une électrode du second réseau;

- un condensateur relié entre chaque électrode du premier réseau et un potentiel de référence et servant successivement au stockage, puis à la lecture des charges dues aux détecteurs reliés à cette électrode;

- un troisième transistor MOS connecté entre chaque électrode du premier réseau et la sortie du dispositif photosensible, et qui permet la lecture des charges stockées dans chaque capacité;

- un second registre à décalages qui, alors que le premier registre adresse une électrode du second réseau, adresse l'une après l'autre, la grille des troisièmes transistors MOS reliés à une électrode du premier réseau, ainsi que les grilles des seconds transistors MOS commandant les grilles des premiers transistors MOS reliés à une autre électrode du premier réseau, ce qui permet la lecture, successivement de tous les détecteurs reliés à chaque électrode du second réseau et ce qui permet alors que s'effectue la lecture d'un détecteur relié à une électrode du premier réseau, d'intégrer les charges provenant d'un détecteur relié à chacune des autres électrodes du premier réseau.

D'autres objets, caractéristiques et résultats de l'invention ressortiront de la description suivante, donnée à titre d'exemple non limitatif et illustrée par les figures annexées qui représentent:

- la figure 1, le schéma d'un dispositif photosensible pour l'infra-rouge selon l'art antérieur;

- la figure 2, le schéma d'un mode de réalisation d'un dispositif photosensible pour l'infra-rouge selon l'invention;

- les figures 3a à f, un mode de réalisation des signaux de commande du dispositif selon l'invention;

- les figures 4a, b, c, des schémas montrant la succession des phases d'intégration et de lecture dans le cas d'un dispositif selon l'invention comportant trois lignes et trois colonnes de détecteurs;

- les figures 5a à d, une vue en coupe transversale d'un mode de réalisation du dispositif selon l'invention et des schémas expliquant son fonctionnement.

· Sur les différentes figures, les mêmes repères désignent les mêmes éléments, mais, pour des raisons de clarté, les cotes et proportions de divers éléments ne sont pas respectées.

La figure 1 a été décrite dans l'introduction à la description.

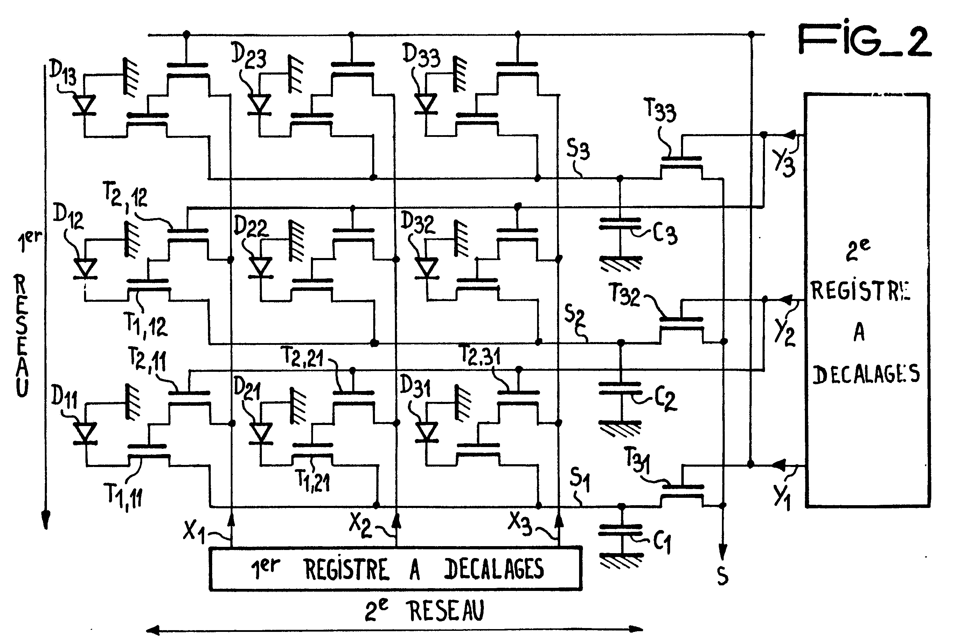

La figure 2 représente le schéma d'un mode de réalisation d'un dispositif photosensible pour l'infra-rouge selon l'invention.

Ce dispositif diffère notamment de celui de la figure 1 car deux transistors MOS sont associés à chaque détecteur $D_{11}$, $D_{12}$, $D_{13}$...:

- comme sur la figure 1, un premier transistor MOS $T_1$, $T_{11}$, $T_1$, $T_{21}$...est connecté entre chaque détecteur et une électrode horizontale du premier réseau d'électrodes;

- un deuxième transistor MOS $T_2$, $T_{11}$, $T_{2, 21}$... est connecté entre la grille de chaque premier transistor MOS et une électrode verticale du second réseau d'électrodes.

Comme sur la figure 1, un premier registre à décalages adresse l'une après l'autre les électrodes verticales du second réseau.

Une autre différence entre le dispositif de la figure 1 et celui de la figure 2 concerne les moyens d'intégration et de lecture des charges reliés aux électrodes horizontales $S_1$, $S_2$, $S_3$ du premier réseau.

Sur la figure 2, ces moyens sont constitués par:

- un condensateur $C_1$, $C_2$, $C_3$... relié entre chaque électrode horizontale $S_1$, $S_2$, $S_3$ du premier réseau et un potentiel de référence, qui peut être le potentiel du second substrat semi-conducteur et qui est représenté symboliquement sur les figures par la masse;

- un troisième transistor MOS $T_{31}$, $T_{32}$, $T_{33}$... relié entre chaque électrode horizontale $S_1$, $S_2$, $S_3$ du premier réseau et la sortie S du dispositif photosensible;

- un second registre à décalages qui adresse l'une après l'autre la grille d'un troisième transistor MOS, ainsi que les grilles des seconds transistors MOS commandant les grilles des premiers transistors MOS reliés à une autre électrode du premier réseau que celle à laquelle est relié ledit troisième transistor MOS.

Dans la suite de la description, on considère que:

- le premier et le second registre à décalages adressent successivement des électrodes de rang i, i + 1, i + 2...

- le second registre à décalages adresse la grille du troisième transistor MOS relié à l'électrode de rang i + 1 du premier réseau et simultanément les grilles des seconds transistors MOS commandant les grilles des premiers transistors MOS reliés a l'électrode de rang i du premier réseau.

Ainsi, par exemple, sur la figure 2, la sortie $Y_2$ du second registre est reliée à la grille du transistor $T_{32}$ et aux grilles des transistors $T_{2, 11}$ $T_{2, 21}$. $T_{2, 31}$. Le même montage est réalisé pour les autres sorties du second registre.

Il est bien entendu que le dispositif selon l'invention peut être modifié pour que les lignes et les colonnes de détecteurs soient adressées dans un autre ordre.

Un grand avantage du dispositif selon l'invention est que l'ensemble du dispositif peut être placé dans un cryostat, les détecteurs infra-rouge étant intégrés sur un premier substrat semi-conducteur interconnecté à un second substrat semi-conducteur sur lequel est intégré le reste du dispositif. Une seule sortie S à haut niveau quitte le cryostat.

Le fonctionnement du dispositif représenté sur la figure 2 diffère de celui du dispositif selon l'art antérieur.

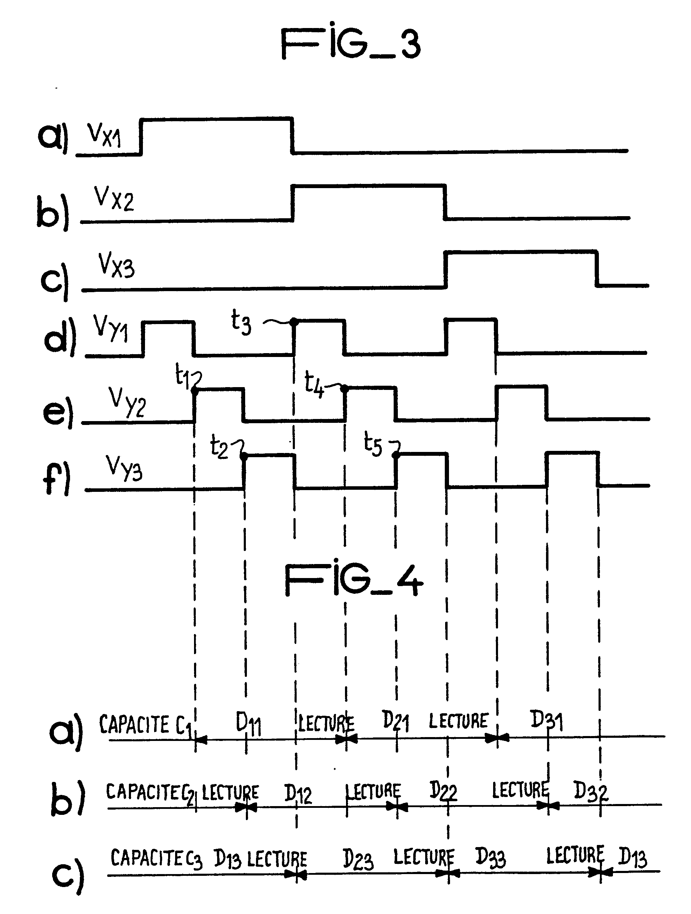

Ce fonctionnement va être décrit en se référant aux figures 3a à f et 4a, b, c.

Les figures 3a à f représentent les tensions $V_{X1}$, $V_{X2}$, $V_{X3}$ et $V_{Y1}$, $V_{Y2}$ $V_{Y3}$ prises sur les sorties $X_1$, $X_2$, $X_3$, $Y_1$, $Y_2$, $Y_3$ du premier et du second registres à décalages.

Chaque tension $V_{X1}$, $V_{X2}$, $V_{X3}$ passe à son tour au niveau haut, d'abord $V_{X1}$ puis $V_{X2}$, $V_{X3}$...

Les tensions $V_{Y1}$, $V_{Y2}$, $V_{Y3}$ passent chacune à leur tour au niveau haut pendant chaque intervalle de temps où l'une des tensions $V_{X1}$, $V_{X2}$, $V_{X3}$ est au niveau haut. Sur les figures 3a à f, l'une des tensions $V_{X1}$, $V_{X2}$, $V_{X3}$ et l'une des tensions $V_{Y1}$, $V_{Y2}$, $Y_{Y3}$ sont toujours au niveau haut.

A l'instant $t_1$ les tensions $V_{X1}$ et $V_{Y2}$ sont au niveau haut et les autres tensions au niveau bas. Le second transistor MOS $T_{2, 11}$ conduit et rend conducteur le premier transistor MOS $T_{1, 11}$. Les charges provenant du détecteur $D_{11}$ sont stockées dans la capacité $C_1$. En même temps que commence l'intégration des charges provenant du détecteur $D_{11}$, le troisième transistor $T_{32}$ devient conducteur et lit les charges stockées dans la capacité $C_2$ en provenance du détecteur $D_{32}$.

A l'instant $t_2$, les tensions $V_{X1}$ et $V_{Y3}$ sont au niveau haut. Le transistor MOS $T_{2, 11}$ qui reçoit sur sa grille la tension $V_{Y2}$ au niveau bas est bloqué. Le transistor $T_{1, 11}$ continue cependant à conduire en raison des charges accumulées précédemment sur sa grille. Le fait que l'ensemble du dispositif photosensible soit placé dans un cryostat porté à faible température favorise le maintien des charges sur la grille du transistor $T_{1, 11}$. L'intégration des charges provenant du détecteur $D_{11}$ se poursuit. Les transistors $T_{2, 12}$ et $T_{1, 12}$ conduisent et entraînent l'intégration des charges provenant du détecteur $D_{12}$ dans la capacité $C_2$. Le transistor $T_{32}$ est bloqué. La lecture des charges provenant de $D_{32}$ est terminée. Le transistor $T_{33}$ conduit et provoque la lecture des charges accumulées dans la capacité $C_3$ en provenance du détecteur $D_{13}$.

A l'instant $t_3$ les tensions $V_{X2}$ et $V_{Y1}$ sont au niveau haut. Le transistor $T_{2, 11}$ est bloqué, mais le transistor $T_{1, 11}$ continue à conduire. L'intégration des charges provenant du détecteur $D_{11}$ se poursuit. Il en est de même pour l'intégration des charges provenant du détecteur $D_{12}$. Le transisror MOS $T_{33}$ est bloqué et la lecture des charges provenant du détecteur $D_{13}$ est terminée. Par contre, le transistor $T_{32}$ conduit et lit les charges stockées dans la capacité $C_1$ provenant du détecteur $D_{11}$. Les transistors $T_{2, 23}$ et $T_{1, 23}$ conduisent et l'intégration dans la capacité $C_3$ des charges provenant du détecteur $D_{23}$ commence.

A l'instant $t_4$, les tensions $V_{X2}$ et $V_{Y2}$ sont au niveau haut. Le transistor MOS $T_{31}$ est bloqué ce qui arrête la lecture des charges stockées dans la capacité $C_1$ en provenance du détecteur $D_{11}$. Le passage de $V_{Y2}$ au niveau haut alors que $V_{X1}$ est au niveau bas provoque le blocage des transistors $T_{2, 11}$ et $T_{1, 11}$ et arrête l'intégration des charges provenant du détecteur $D_{11}$. La lecture des charges provenant du détecteur $D_{12}$ commence alors que se poursuit l'intégration des charges provenant de ce détecteur. L'intégration des charges provenant du détecteur $D_{23}$ se poursuit alors que commence l'intégration des charges provenant du détecteur $D_{21}$.

Le fonctionnement du dispositif de la figure 2 est basé sur les considérations suivantes où les transistors $T_{1, 11}$ et $T_{2, 11}$ sont pris comme exemple:

- lorsque les tensions $V_{X1}$ et $V_{Y2}$ sont au niveau haut, les transistors MOS $T_{2, 11}$ et $T_{1, 11}$ conduisent;
- lorsque $V_{X1}$ est au niveau haut et $V_{Y2}$ au niveau bas, le transistor $T_{2, 11}$ est bloqué mais le transistor $T_{1, 11}$ continue à conduire grâce aux charges accumulées sur sa grille;
- lorsque $V_{X1}$ est au niveau bas et $V_{Y2}$ au niveau haut, les transistors $T_{2, 11}$ et $T_{1, 11}$ sont bloqués.

Sur les figures 4a, b, c, on a montré comment se répartissent en fonction du temps l'intégration et la lecture des détecteurs réalisées grâce aux capacités $C_1$, $C_2$ et $C_3$.

On constate qu'on lit successivement les détecteurs reliés à chaque électrode du second réseau.

Ainsi on lit les détecteurs $D_{13}$, $D_{11}$, $D_{12}$, puis $D_{23}$, $D_{21}$, $D_{22}$, $D_{33}$, $D_{31}$, $D_{32}$ et à nouveau $D_{13}$, $D_{11}$, $D_{12}$...

On constate que, pendant qu'est lu un détecteur relié à une électrode horizontale, se produit l'intégration des charges provenant d'un détecteur relié à chacune des autres électrodes horizontales. Ainsi pendant qu'on lit $D_{11}$ on intègre les charges provenant de $D_{12}$ et $D_{23}$.

Contrairement à ce qui se passe avec le dispositif de la figure 1, les périodes d'intégration des détecteurs sont décalées dans le temps.

Un avantage du dispositif selon l'invention est de ne comporter qu'une seule capacité par ligne (ou colonne) de détecteurs, tout en permettant des durées d'intégration des charges élevées. On voit sur la figure 4 que l'intégration des charges provenant de $D_{11}$ se fait de $t_1$ à $t_4$, alors qu'avec le dispositif de la figure 1 cette intégration n'aurait lieu que pendant une durée égale à $t_2 - t_1$.

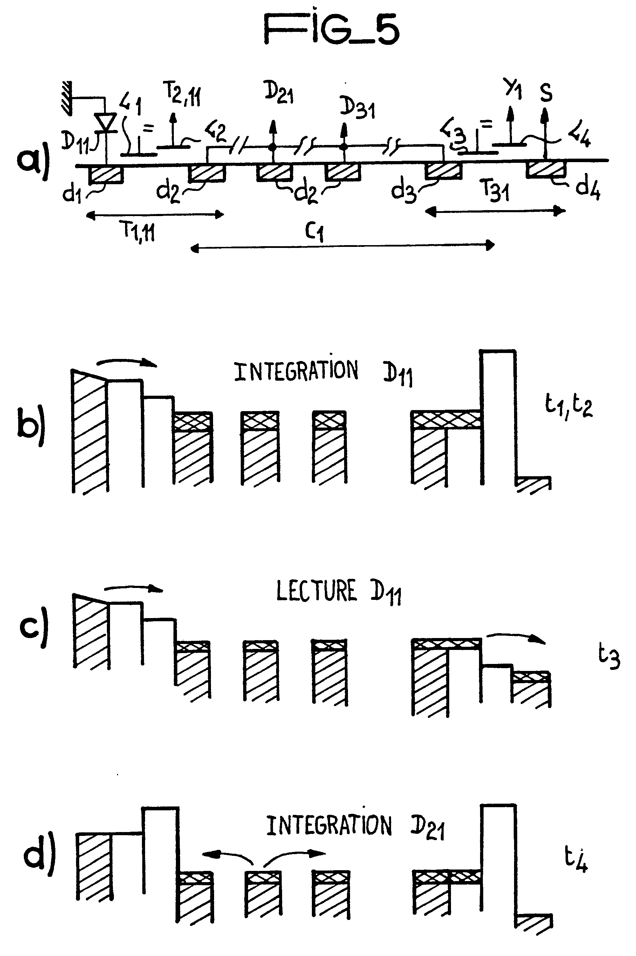

La figure 5a est une vue en coupe transversale réalisée dans le substrat semi-conducteur, en silicium de type P par exemple, sur lequel est intégré le dispositif de la figure 2.

Cette coupe a été effectuée au niveau des élements reliés à la photodiode $D_{11}$.

Cette photodiode $D_{11}$ a son anode reliée à un potentiel de référence représenté symboliquement sur la figure par la masse et sa cathode reliée au premier transistor MOS $T_{1, 11}$ constitué par deux diodes $d_1$ et $d_2$ et deux grilles $g_1$ et $g_2$.

La première grille $g_1$ est portée à un potentiel constant et contribue à la polarisation de la photodiode.

La deuxième grille $g_2$ est commandée par le deuxième transistor MOS $T_{2, 11}$ qui n'est pas représenté sur la figure 5a.

Une électrode relie les diodes $d_2$ des premiers transistors $T_{1, 11}$, $T_{1, 21}$, $T_{1, 13}$ de la première ligne de détecteurs $D_{11}$, $D_{21}$, $D_{31}$.

Cette électrode $S_1$ aboutit à une diode $d_3$ qui fait partie du troisième transistor MOS $T_{31}$. Ce transistor comporte deux grilles, une grille $G_3$ à un potentiel constant et une grille $G_4$ qui est reliée a la sortie $Y_1$ du second registre à décalages. Le transistor MOS $T_3$ comporte aussi une diode $d_4$ reliée à la sortie S du dispositif.

La capacité $C_1$ est constituée par les capacités de toutes les diodes $d_2$ de la ligne de détecteurs, par la capacité de la diode $d_3$ et de la grille $G_3$ du transistor $T_{31}$.

Les figures 5b, c et d montrent l'évolution des potentiels de surface dans le substrat semi-conducteur au cours du temps.

Sur la figure 5b, aux temps $t_1$ et $t_2$ se produit l'intégration dans la capacité $C_1$ des charges dues au détecteur $D_{11}$.

Sur la figure 5c, au temps $t_3$ se produit la lecture par le transistor $T_{31}$ des charges stockées dans la capacité $C_1$.

Sur la figure 5d, au temps $t_4$, la capacité $C_1$ stocke les charges provenant du détecteur $D_{21}$.

Les détecteurs sensibles à l'infra-rouge peuvent être des photodiodes comme sur les figures ou un autre type de détecteurs infra-rouge, tel que par exemple, un détecteur du type grille-isolant-semi-conducteur. Dans le cas des photodiodes, elles peuvent être reliées soit à une diode réalisée sur le second substrat semi-conducteur, comme sur les figures, soit à une grille réalisée sur ce second substrat sans que le fonctionnement du dispositif selon l'invention soit modifié. Les photodiodes peuvent être par exemple reliées à une grille d'un premier transistor MOS ayant au moins une autre grille reliée a un deuxième transistor MOS.

De même, les photo-détecteurs et le reste du dispositif sont intégrés sur des substrats semiconducteurs différents et bien adaptés. Par exemple, pour les photo-détecteurs, de l'antimoniure d'indium, du tellurure d'étain et de plomb, du tellurure de cadmium et de mercure... Le reste du dispositif est intégré par exemple sur un substrat semi-conducteur en silicium de type P ou N.

Enfin il est bien entendu que les rôles des électrodes du premier et du second réseau d'électrodes peuvent être inversés sans problème, cèst-à-dire que le premier registre à décalages peut être relié aux électrodes du premier réseau et les capacités, les troisièmes transistors MOS et le second registre à décalages peuvent être reliés aux électrodes du second réseau.

Dans la présente description, c'est le passage au niveau haut des tensions $V_{Y1}$, $V_{Y2}$, $V_{Y3}$ par exemple qui provoque la conduction des transistors $T_{31}$ $T_{32}$, $T_{33}$. Lorsque le dispositif est intégré sur un substrat de type N, il est bien entendu que c'est le passage au niveau bas des signaux de commande qui provoque la conduction.

## Revendications

1. Dispositif photosensible pour l'infra-rouge comportant:
- un réseau de N lignes et de M colonnes de détecteurs infrarouge ($D_{11}$, $D_{12}$...), intégrés sur un premier substrat semi-conducteur et deux réseaux d'électrodes, l'un des réseaux étant affecté aux détecteurs d'une même ligne et l'autre aux détecteurs d'une même colonne;
- un premier transistor MOS ($T_{1, 11}$, $T_{1, 12}$...) connecté entre chaque detecteur et une électrode d'un premier réseau;
- un premier registre à décalages qui adresse l'une après l'autre les électrodes d'un second réseau, les premiers transistors MOS et le premier registre étant intégrés sur un second substrat semi-conducteur et placés dans un cryostat avec les détecteurs, caractérisé en ce que le dispositif comporte, intégrés dans le second substrat semi-conducteur et placés dans le cryostat:
- un deuxième transistor MOS ($T_{2, 11}$, $T_{2, 12}$...) connecté entre la grille de chaque premier transistor MOS ($T_{1, 11}$, $T_{1, 12}$...) et une électrode du second réseau;
- un condensateur ($C_1$, $C_2$...) relié entre chaque électrode du premier réseau et un potentiel de référence et servant successivement au stockage puis à la lecture des charges dues aux détecteurs reliés à cette électrode;
- un troisième transistor MOS ($T_{31}$, $T_{32}$...) connecté entre chaque électrode du premier réseau et la sortie (S) du dispositif photosensible, et qui permet la lecture des charges stockées dans chaque capacité;
- un second registre à décalage qui, alors que le premier registre adresse une électrode du second réseau, adresse l'une après l'autre, la grille des troisièmes transistors MOS reliés à une électrode du premier réseau, ainsi que les grilles des seconds transistors MOS commandant les grilles des premiers transistors MOS reliés à une autre électrode du premier réseau, ce qui permet la lecture successivement de tous les détecteurs reliés à chaque électrode du second réseau et ce qui permet alors que s'effectue la lecture d'un détecteur relié à une électrode du premier réseau d'intégrer les charges provenant d'un détecteur relié à chacune des autres électrodes du premier réseau.

2. Dispositif selon la revendication 1, caractérisé en ce que les détecteurs infra-rouge sont des photodiodes.

3. Dispositif selon l'une des revendication 1 ou 2, caractérisé en ce que:
- le premier et le second registre à décalages adressent successivement les électrodes de rang 1, 2, 3... i, i+1, i+2... puis à nouveau, 1, 2, 3... ;
- le second registre à décalages adresse la grille du troisième transistor MOS relié à l'électrode de rang i+1 du premier réseau et les grilles des seconds transistors MOS commandant les grilles des premiers transistors MOS reliés à l'électrode de rang i du premier réseau.

## Patentansprüche

1. Photoempfindliche Vorrichtung für den Infrarotbereich, mit:
- einem Raster aus N Zeilen und M Spalten von in einem ersten Halbleitersubstrat integrierten Infrarot-Detektoren ($D_{11}$, $D_{12}$...) und zwei Netzwerken aus Elektroden, wobei eines der Netzwerke den Detektoren einer selben Zeile und das andere den Detektoren einer selben Spalte zugeordnet sind;
- einem ersten MOS-Transistor ($T_{1, 11}$, $T_{1, 12}$...) der zwischen jedem Detektor und einer Elektrode eines ersten Netzwerks angeschlossen ist;
- einem ersten Schieberegister, das die Elektroden eines zweiten Netzwerks nacheinander adressiert, wobei die ersten MOS-Transistoren und das erste Register in einem zweiten Halbleitersubstrat integriert und mit den Detektoren in einem Kryostat untergebracht sind, dadurch gekennzeichnet, daß die Vorrichtung in dem zweiten Halbleitersubstrat integriert und in dem Kryostat untergebracht umfaßt:
- einen zweiten MOS-Transistor ($T_{2, 11}$, $T_{2, 12}$...) der zwischen dem Gate jedes ersten MOS-Transistors ($T_{1, 11}$, $T_{1, 12}$...) und einer Elektrode des zweiten Netzwerks angeschlossen ist;

- einen Kondensator ($C_1$, $C_2$...), der zwischen jeder Elektrode des ersten Netzwerks und einem Referenzpotential angeschlossen ist und nacheinander der Speicherung und dem Auslesen der Ladungen, die von den mit dieser Elektrode verbundenen Detektoren Verursacht werden, dient;

- einen dritten MOS-Transitor ($T_{31}$, $T_{32}$...), der zwischen jeder Elektrode des ersten Netzwerks und dem Ausgang (S) der Photoempfindlichen Vorrichtung angeschlossen ist und das Auslesen der in jeder Kapazität gespeicherten Ladungen ermöglicht;

- ein zweites Schieberegister, das, während das erste Register eine Elektrode des zweiten Netzwerks adressiert, nacheinander das Gate der dritten, mit einer Elektrode des ersten Netzwerks verbundenen MOS-Transistoren adressiert sowie die Gates der zweiten MOS-Transistoren adressiert, die die Gates der ersten, mit einer anderen Elektrode des ersten Netzwerks verbundenen MOS-Transistoren steuern, wodurch das Auslesen aller mit jeder Elektrode des zweiten Netzwerks verbundenen Detektoren nacheinander ermöglicht ist, sowie während des Auslesens eines Detektors, der mit einer Elektrode des ersten Netzwerks verbunden ist, die Integration der Ladungen ermögliche ist, die aus einem mit jeder der anderen Elektroden des ersten Netzwerks verbundenen Detektor stammen.

2. Vorrichtung nach Anspruch 1, dadurch gekennzeichnet, daß die Infrarotdetektoren Photodioden sind.

3. Vorrichtung nach einem der Ansprüche 1 und 2, dadurch gekennzeichnet, daß:

- das erste und zweite Schieberegister nacheinander die Elektroden der Ordnung 1, 2, 3...i, i+1, i+2... und wiederum 1, 2, 3... adressieren;

- das zweite Schieberegister das Gate des dritten MOS-Transistors adressiert, der mit der Elektrode der Ordnung i+1 des ersten Netzwerks verbunden ist, sowie die Gates der zweiten MOS-Transistoren adressiert, die die Gates der ersten mit der Elektrode der Ordnung i des ersten Netzwerks verbundenen MOS-Transistoren steuern.

## Claims

1. A photosensitive device for infra-red radiation comprising:

- a network made up of N lines and M columns of infra-red detectors ($D_{11}$, $D_{12}$...) integrated on a first semiconductor substrate and two electrode networks, one of said networks being connected with the detectors of a same given line and the other being connected with the detectors of a given column;

- a first MOS transistor ($T_{1, 11}$, $T_{1, 12}$...) connected between each detector and an electrode of the first network;

- a first offsetting register which sequentially addresses the electrodes of a second network, the first MOS transistors and the first register being integrated on a second semiconductor substrate and placed in a cryostat with the detectors, characterized in that the said device comprises, integrated in the second semiconductor substrate and placed in the cryostat:

- a second MOS transistor ($T_{2, 11}$, $T_{2, 12}$...) connected between the gate of each first MOS transistor ($T_{1, 11}$, $T_{1, 12}$...) and an electrode of the second network;

- a capacitor ($C_1$, $C_2$..) connected between each electrode of the first network and a reference potential and serving successively for the storing and then the reading of the charges due to the detectors connected with this electrode;

- a third MOS transistor ($T_{31}$, $T_{32}$) connected between each electrode of the first network and the output (S) of the photosensitive device, and which permits the reading of the charges stored in each capacitor;

- a second offsetting register which, while the first register is addressing an electrode of the second network, addresses in succession the gate of the third MOS transistors connected with an electrode of the first network, and furthermore the gates of the second MOS transistors control the gates of the first MOS transistors connected with another electrode of the first network, thus permitting the successive reading of all the detectors connected with each electrode of the second network and makes it possible, while a detector connected with an electrode of the first network is being read, to integrate the charges coming from a detector connected with each other electrode of the first network.

2. The device as claimed in claim 1 characterized in that the infra-red detectors are photodiodes.

3. The device as claimed in claim 1 or claim 2 characterized in that:

- the first and tre second offsetting registers successively address the electrodes of the series 1, 2, 3,... i, i+1, i+2.. and then again 1, 2, 3...;

- the second offsetting register address the gate of the third MOS transistor connected with the electrode of the series i+1 of the first network and the gates of the second MOS transistors controlling the gates of the first MOS transistors connected with the electrode of the i series of the first network.

FiG_1

M COLONNES , 2e RESEAU

N LIGNES 1er RESEAU

1er REGISTRE A DECALAGES

MULTIPLEXEUR

0 148 654

FIG_2

1er RESEAU

2e RESEAU

1er REGISTRE A DECALAGES

2e REGISTRE A DECALAGES

0 148 654

# FIG_3

a) $V_{X1}$

b) $V_{X2}$

c) $V_{X3}$

d) $V_{Y1}$   $t_3$

e) $V_{Y2}$   $t_{12}$   $t_4$

f) $V_{Y3}$   $t_2$   $t_5$

# FIG_4

a) CAPACITE $C_1$   $D_{11}$   LECTURE   $D_{21}$   LECTURE   $D_{31}$

b) CAPACITE $C_2$ LECTURE   $D_{12}$   LECTURE   $D_{22}$   LECTURE   $D_{32}$

c) CAPACITE $C_3$ $D_{13}$ LECTURE   $D_{23}$   LECTURE   $D_{33}$   LECTURE   $D_{13}$

# FIG_5

a)

b) INTEGRATION $D_{11}$    $t_1, t_2$

c) LECTURE $D_{11}$    $t_3$

d) INTEGRATION $D_{21}$    $t_4$